(19) Europäisches Patentamt
European Patent Office
Office européen des brevets

(11) **EP 1 519 146 B1**

(12) **EUROPEAN PATENT SPECIFICATION**

(45) Date of publication and mention
of the grant of the patent:
**30.01.2008 Bulletin 2008/05**

(51) Int Cl.:
***G01C 15/00*** *(2006.01)*

(21) Application number: **03761825.3**

(22) Date of filing: **27.06.2003**

(86) International application number:
**PCT/JP2003/008177**

(87) International publication number:
**WO 2004/003474 (08.01.2004 Gazette 2004/02)**

(54) **POSITION DETECTOR**

POSITIONSDETEKTOR

DETECTEUR DE POSITION

(84) Designated Contracting States:
**CH DE LI SE**

(30) Priority: **28.06.2002 JP 2002191489**

(43) Date of publication of application:
**30.03.2005 Bulletin 2005/13**

(73) Proprietor: **Kabushiki Kaisha TOPCON
Tokyo (JP)**

(72) Inventors:
• **KUMAGAI, Kaoru
Itabashi-ku, Tokyo 174-8580 (JP)**
• **OHTOMO, Fumio
Itabashi-ku, Tokyo 174-8580 (JP)**

(74) Representative: **Altenburg, Udo
Patent- und Rechtsanwälte
Bardehle . Pagenberg . Dost .
Altenburg - Geissler
Galileiplatz 1
81679 München (DE)**

(56) References cited:
EP-A1- 0 874 218          JP-A- 7 083 657
JP-A- 62 254 008        JP-B2- 2 945 933
US-A- 4 567 347          US-B1- 6 249 743

• **PATENT ABSTRACTS OF JAPAN vol. 018, no. 530
(P-1809), 6 October 1994 (1994-10-06) & JP 06
186036 A (TAISEI CORP), 8 July 1994 (1994-07-08)**

## EP 1 519 146 B1

**Description**

Technical Field

The present invention relates to a position detection instrument that scans and detects a target to be measured and thereby measures a direction and a distance, and more particularly to a position detection instrument that emits distance measuring light and measuring light to perform three-dimensional measurement of a target position, and that records image data in its emission direction or in directions other than the emission direction.

Background Art

Heretofore, a total station is used for three-dimensional position measurement and settings. The total station has functions of measuring a distance and an angle and then outputting measured values as electric data. When performing the measurement, the total station is first placed at a reference position before placing a target at a point of measurement. Next, the target is collimated by the total station to measure a horizontal angle and an angular height. Then, a distance to a reflecting prism (corner cube) provided on the target is measured, and thereby distance data can be obtained.

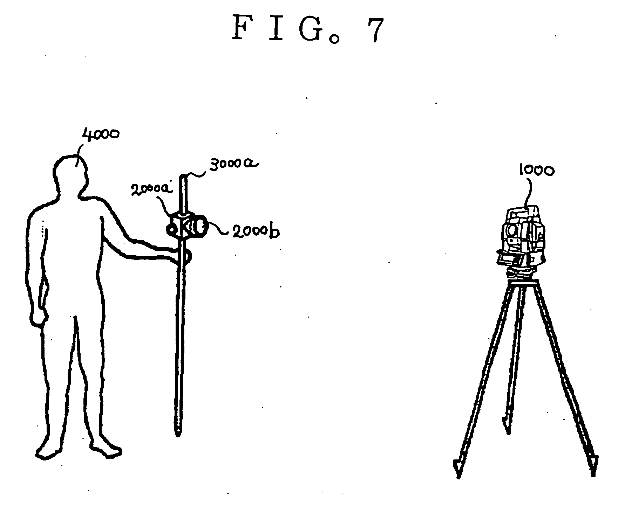

Distance and angle data which have been measured are stored in an internal memory of the total station. In addition, the distance and angle data measured are output to an external memory device or a computer as data of survey work as the need arises. Fig. 7 is a diagram illustrating survey work using a total station. The total station (1000) is placed at a reference position. A target (2000a) is attached to a pole (3000a). The pole (3000a) is placed at a point of measurement by an operator (4000).

The total station (1000) comprises the following: a telescope unit; a stand for freely supporting up and down rotation of the telescope unit; a base for freely supporting horizontal rotation of the stand; and a leveling unit that is provided on the lower part of the base, and that is used to level a slant of a main body of the total station (1000) before securing it to the top of a tripod. It is to be noted that circuits, and the like, used for the distance measurement and the angle measurement are built into the total station (1000).

The operator on the total station (1000) side rotates the telescope unit up and down and right and left to find the target (2000a) at a collimation center, and then obtains a horizontal angle, an angular height, and a distance relative to the reference position.

However, in the survey work where the conventional total station (1000) is used, at least two operators, that is to say, an operator on the total station 1000 side and an operator for placing the target (2000a), are required. The number of operators increases with increase in the number of targets (2000a). However, it is difficult to measure many targets (2000a) in a moment. It is practically impossible. To be more specific, measuring time in response to the number of targets (2000a) is required for the operator to collimate the target (2000a) by use of the telescope unit, and further to perform measurement. As a result, work efficiency cannot be improved to a large extent, which was a problem.

A position measuring instrument as defined in the pre-characterizing portion of claim 1 is known from US-6,249,743 B1.

In this known instrument, the coordinates of the reflector are determined on the basis of a deviation of the reflected image relative to a central axis in the output of the image sensor.

Disclosure of Invention

The above problem is solved according to the invention by an instrument as defined in claim 1. Advantageous embodiments of the invention are defined in dependent claims 2 to 7.

In the present invention, a light source unit emits measuring light, and an image sensor then receives its reflected light. An emitting means emits measuring light and then leads its reflected light to the image sensor. A swinging mechanism swings an emitting means, and an angle detector detects an emission direction of the emitting means accordingly. The light source unit and the image sensor are provided in such a manner that they are fixed. An operation processing unit can covert coordinates of a reflector as a deviation relative to a central axis on the basis of an output of the image sensor and an output of the angle detector at the time of light receiving.

In addition, the present invention may also further comprise a distance measuring unit that emits measuring light and distance measuring light to determine a distance to the reflector and thereby to determine a position of the reflector from the distance and a direction.

Moreover, the present invention may also further comprise a storage unit for storing image data obtained from the image sensor.

Further, according to the present invention, when obtaining image data from the image sensor, it is also possible to convert coordinates of the image data on the basis of an output of the angle detector at the time of light receiving by the image sensor.

Additionally, the light receiving unit according to the present invention may also be so devised that the first light receiving sensor detects a deviation relative to an optical axis center, and that the second light receiving sensor covers a detection range different from that of the first light receiving sensor.

Moreover, according to the present invention, image data are also recorded at intervals of a predetermined swinging angle so that the image data are overlapped with one another. As a result, the recorded image data can also be formed into a continuously arranged image.

Furthermore, according to the present invention, image data obtained from the first light receiving sensor can also be associated with image data obtained from the second image sensor with respect to their positions.

Brief Description of Drawings

Fig. 1 is a diagram illustrating a position detection instrument 10000 according to one embodiment of the present invention;

Fig. 2 is a diagram illustrating an electric configuration of the position detection instrument 10000 according to this embodiment;

Fig. 3 is a diagram illustrating principles of this embodiment;

Fig. 4 is a diagram illustrating principles of this embodiment;

Fig. 5 is a diagram illustrating principles of this embodiment;

Fig. 6 is a diagram illustrating principles of this embodiment; and

Fig. 7 is a diagram illustrating the prior art.

Best Modes for Carrying out the Invention

Embodiments of the present invention will be described with reference to drawings as below.

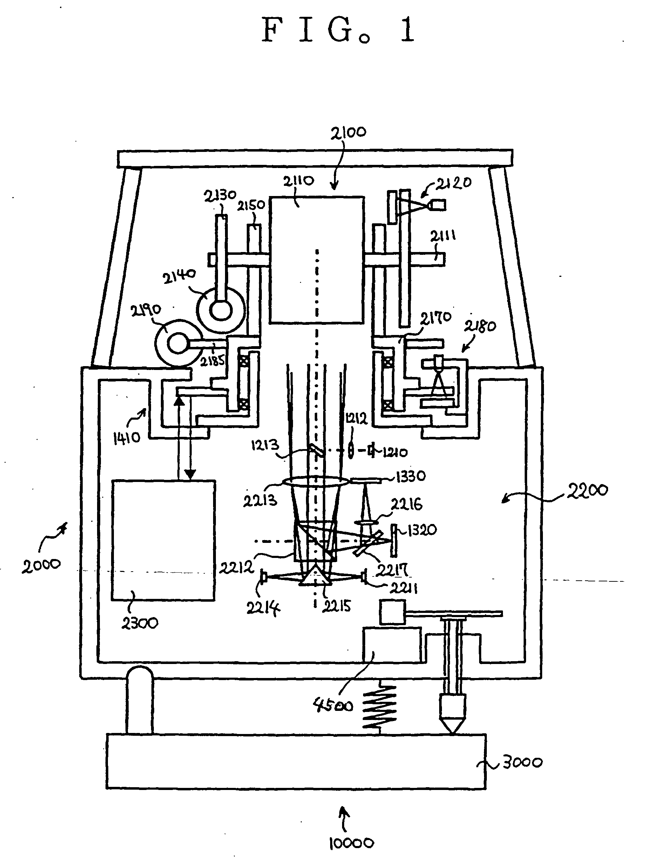

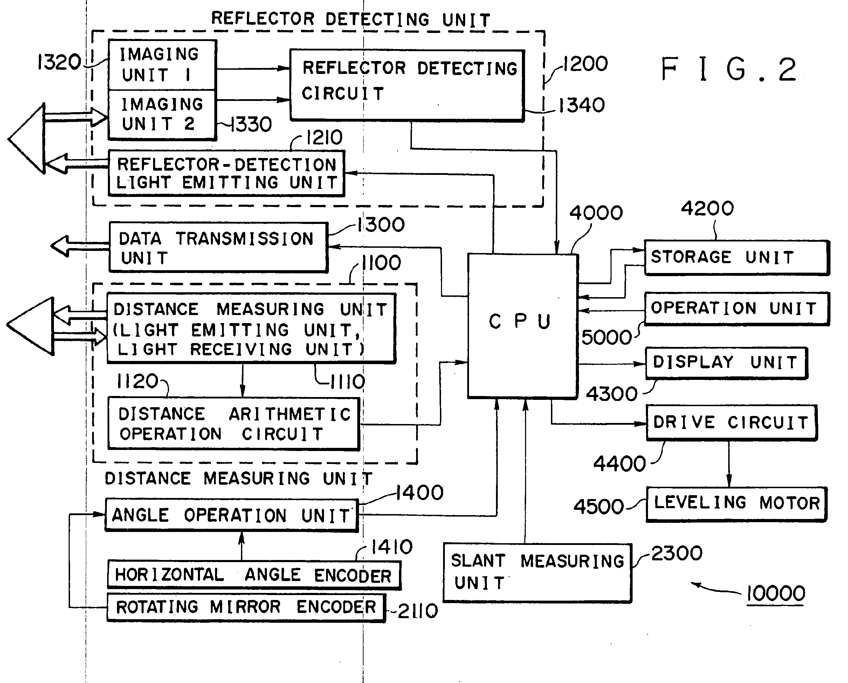

A position detection instrument 10000 according to this embodiment will be described with reference to Figs. 1 and 2.

The position detection instrument 10000 comprises a main body 2000 and a leveling unit 3000.

The main body 2000 comprises a rotating unit 2100, a fixed unit 2200, and a slant measuring unit 2300.

The main body 2000 is constituted of a swinging part and a fixed part. The swinging part has rotation axes in both horizontal and vertical directions, each of which is capable of 360 degree rotation by use of a rotation motor.

The rotating unit 2100 corresponds to the swinging part. The rotating unit 2100 comprises a rotating part in the vertical direction (vertical swinging unit) and a rotating part in the horizontal direction (horizontal swinging unit).

The rotating part in the vertical direction (vertical swinging unit) is used to rotate a rotating mirror 2110 in the vertical direction (angular height). Horizontal axes 2111 are provided at both ends of the rotating mirror 2110. A rotary encoder 2120 used for measuring an angular height is given to one horizontal axis 2111; and a vertical drive motor 2140 is connected to the other horizontal axis 2111 through a first drive gear 2130. Because the vertical drive motor 2140 is secured to a support 2150, the rotating part in the vertical direction rotates as one body by driving force of the vertical drive motor 2140.

The rotating part in the horizontal direction (horizontal swinging unit) is used to rotate the rotating mirror 2110 in the horizontal direction. The rotating part in the horizontal direction comprises the following: a horizontal rotating unit 2170; a support 2150 formed on the horizontal rotating unit 2170; and a horizontal axis 2111 formed on the rotating mirror 2110 that is secured to the support 2150. The rotating part in the horizontal direction is configured to rotate as one body.

In addition, a rotary encoder 2180 used for measuring a horizontal angle is mounted to the horizontal rotating unit 2170. Moreover, a horizontal drive motor 2190 is connected to the horizontal rotating unit 2170 through a second drive gear 2185. Because the horizontal drive motor 2190 is secured to a cabinet, driving force of the horizontal drive motor 2190 causes the rotating unit 2100 which includes the horizontal rotating unit 2170 to rotate in the horizontal direction.

It is to be noted that a rotary encoder 2120 used for measuring an angular height and the rotary encoder 2180 used for measuring a horizontal angle correspond to an angle detector.

The leveling unit 3000 has a structure that basically supports the main body 2000 using three legs. One of three legs is supported by a spherical surface, for example, so that the leg can swing freely with circular movements. The remaining two legs can move up and down by driving force of a leveling drive motor. It is so devised that the main body 2000 is leveled by adjusting the up and down movement according to a slant signal from the slant measuring unit 2300.

Next, an electric configuration of the position detection instrument 10000 according to this embodiment will be described with reference to Fig. 2.

The position detection instrument 10000 comprises a distance measuring unit 1100, a reflector detecting unit 1200, an angle measuring unit 1400, a slant measuring unit 2300, a storage unit 4200, a display unit 4300, a drive circuit 4400, a motor 4500, an arithmetic processing means 4000, and an operation unit 5000.

Further, the slant measuring unit 2300 detects a rotation backlash, and a slant, of the rotating unit 2100 caused by the accuracy in rotation of bearings; and the arithmetic processing means 4000 corrects a light receiving position of the target to be measured, at which the light receiving unit receives light. As a result, the influence of the rotation backlash and the slant can be eliminated. It should be noted that the distance measuring unit 1100, the reflector detecting unit 1200, an output optical system, and an input optical system as well as the above-mentioned components correspond to the fixed part.

The slant measuring unit 2300 detects a slant of the main body of the position detection instrument 10000. In addition to it, judging from a slant of a horizontal angle encoder 1410 relative to its horizontal reference, the slant measuring unit 2300 provides data used for correcting values of a distance, an angle, and image data.

The slant measuring unit 2300 is used to detect a correct position of a target 2000a, first by ensuring a level surface, and second by detecting a deviation in rotation of the rotating unit 2100, which is an mechanical error, and then by using the deviation in rotation for correction on the basis of an angle.

As for the distance measuring unit 1100, distance measuring light emitted from a distance-detection light emitting unit 2211 is reflected by a triangle mirror 2215. Then, the distance measuring light passes through a dichroic prism 2212, and further passes through an objective lens 2213, before the distance measuring light is reflected by the rotating mirror 2110. After that, the distance measuring light is emitted in a direction of a target to be measured, which is not illustrated. The reflected light coming from the target to be measured, through a reverse path, is received by a light receiving element of a distance-detection light receiving unit 2214.

A distance from the position detection instrument 10000 to the target 2000a is calculated by time difference from the time when the distance-detection light emitting unit 2211 emits pulses of light till the distance-detection light receiving unit 2214 receives the pulses of light. It is to be noted that this arithmetic operation is executed by a distance arithmetic operation circuit 1120. In addition, the distance measuring unit 1110 comprises the distance-detection light emitting unit 2211, the distance-detection light receiving unit 2214, a light receiving circuit, and a light emitting circuit. Moreover, instead of this distance measuring method, other phase-difference measuring methods may also be adopted.

The reflector detecting unit 1200 comprises a reflector detection light emitting unit 1210, a first imaging unit 1320, a second imaging unit 1330, and a reflector detecting circuit 1340.

The first imaging unit 1320 and the second imaging unit 1330 receive light to obtain an image. Incidentally, the received light is emitted from the reflector detection light emitting unit 1210, and is then reflected by the reflector 2000b of the target 2000a before it is received by the first imaging unit 1320 and the second imaging unit 1330.

In this embodiment, the first imaging unit 1320 and the second imaging unit 1330 use a solid-state image sensing device such as a CCD. The first imaging unit 1320 corresponds to a first image sensor, and the second imaging unit 1330 corresponds to a second image sensor.

As operation of the reflector detection light emitting unit 1210, for example, the pulsed laser diode 1211 placed in the main body emits light. The light is then collimated by a collimate lens 1212, and is further emitted by the mirror 2110.

In a state in which the reflector detection light emitting unit 1210 stays lit up, a video signal of the first imaging unit 1320 and that of the second imaging unit 1330 include reflected light from the reflector detection light emitting unit 1210, which is reflected by the reflector 2000b of the target 2000a. On the other hand, in a state in which the reflector detection light emitting unit 1210 is turned off, the video signals do not include the reflected light from the reflector 2000b.

Therefore, if a difference between the video signal in the on state of the reflector detection light emitting unit 1210 and the video signal in the off state is determined, which are output from the first imaging unit 1320 and the second imaging unit 1330, only reflected light from the reflector 2000b remains as a video signal. Accordingly, by determining a position of the reflected light in an image, it is possible to detect a center position of the reflector on the first imaging unit 1320 and the second imaging unit 1330.

Moreover, by use of the result of the detection, it is possible to determine a deviation of a collimation center O from a center position of the target 2000a.

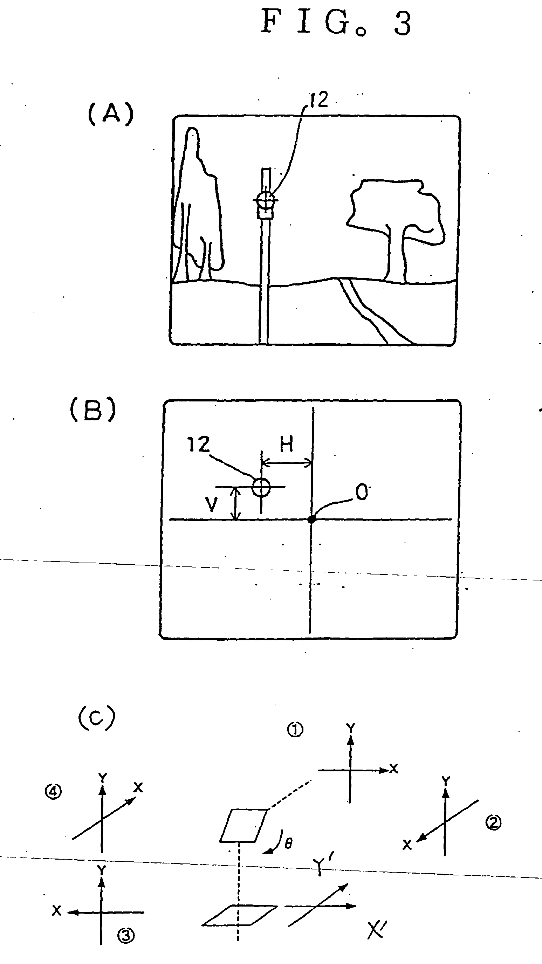

Fig. 3 (A) illustrates a circumferential image including the reflector 2000b of the target 2000a placed on a pole 3000. If the reflector detection light emitting unit 1210 emits light, not only visible light but also an image of returning light from the reflector 2000b of the target 2000a is repeatedly obtained. Accordingly, by determining a difference between an image formed when the reflector detection light emitting unit 1210 is turned on and an image formed when the reflector detection light emitting unit 1210 is turned off, it is possible to obtain, as shown in Fig. 3 (B), an image formed only by reflected light (returning light) 12, a size of which is nearly the same as that of the reflector 2000b of the target 2000a. On the assumption that the center of a window agrees with the collimation center O, it is possible to easily calculate from the image a horizontal-direction deviation H, and a vertical-direction deviation V, of the returning light 12.

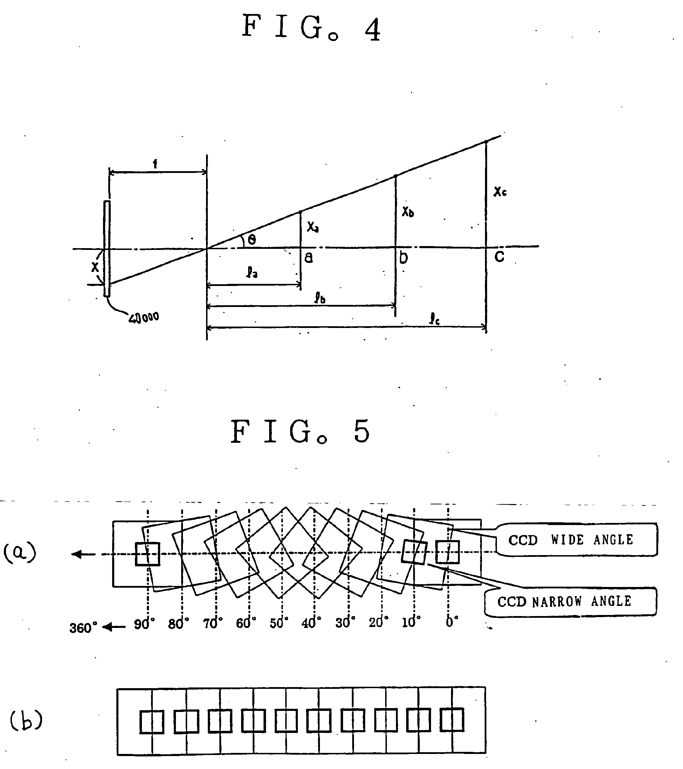

In addition, as shown in Fig. 4, on the assumption that an image sensor 40000 is placed at a position of a focal length f of a lens, and that an angle of returning light entering into the image sensor 40000 is θ, a deviation x from an optical axis 0 of the image sensor 40000 is f*tan θ. Accordingly, determining the deviation x permits an angle required for correction to be uniquely determined. Accordingly, regardless of distances to a target prism la, lb, lc, it is possible to calculate the horizontal-direction deviation H and the vertical-direction deviation V.

To be more specific, because the reflector detection light emitting unit 1210, the first imaging unit 1320, and the second imaging unit 1330 are provided in such a manner that they are fixed, in response to a position of a swinging unit the image rotates about a position which coincides with the collimation center O.

If description is made with reference to Fig. 3 (C), for example, viewing from a position at which the position detection instrument 10000 is placed, a horizontal direction is regarded as x axis and a vertical direction is regarded as y axis. Here, if there exists the reflector 2000b of the target 2000a at a position that deviates in the y direction by a constant angle, the position on the first imaging unit 1320 and the second imaging unit 1330 varies as shown in Fig. 3 (C) in response to a placed position relative to the position detection instrument 10000 as shown by ① through ④. Therefore, if a deviation from the first imaging unit 1320 and the second imaging unit 1330 is detected to move the collimation center O to the center of the reflector 2000b, and in addition to it, if deviation angles in horizontal and vertical directions of the reflector 2000b of the target 2000a are determined, it is necessary to convert coordinates in the image sensor 40000 into horizontal and vertical coordinates for rotating the main body 2000. An equation for the above is given as a first equation, which is expressed by the rotation of coordinates. The conversion processing is executed in an operation processing unit 4000.

The reflector detecting unit 1200 comprises the reflector detection light emitting unit 1210, the first imaging unit 1320, the second imaging unit 1330, and the reflector detecting circuit 1340.

An optical system of the reflector detecting unit 1200 comprises the collimator lens 1212 provided on the fixed unit 2200, the dichroic prism 2212, a half mirror 2217, a relay lens 2216, the first imaging unit 1320, the second imaging unit 1330, a mirror 1213, and the mirror 2110 of the swinging unit.

Light from the first imaging unit 1320 is reflected by the beam splitter 2212, which is provided at a focal position of an objective lens 2213.

The first imaging unit 1320 has a wide visual field along the perimeter direction because a collimation direction can be bent in vertical and horizontal directions by a mirror of the swinging unit. A horizontal angle and an angular height, which are used for collimation from the position detection instrument 10000 to the reflector 2000b, can be determined by information about an image-formation position of a photoreceiver's image (substantially, a corner cube image) formed on the first imaging unit 1320, and by a horizontal angle and a vertical angle that are calculated in an angle operation unit to direct the mirror.

Additionally, a resolution angle of a CCD is determined by the number of picture elements, and a viewing angle, of the CCD. The resolution angle decreases with increase in number of picture elements and decrease in viewing angle.

For this reason, the second imaging unit 1330 is placed at a position beyond the relay lens 2216 so that the second imaging unit 1330 can be used in combination with the first imaging unit 1320.

Because a viewing angle of the second imaging unit 1330 is narrowed by the relay lens 2216, a resolution angle becomes smaller as compared with that of the first imaging unit 1320, which makes it possible to determine a deviation with a high degree of accuracy.

In addition, if a wide-angle image sensor is used to detect the reflector 2000b and then driving is performed so as to stay within a limit of a narrow angle, reflector detection can be achieved at high speed and with high accuracy.

The storage unit 4200 stores design data to which image data obtained from the image sensor is linked. Not only measured image data or design data but also three-dimensional position information based on measured data is displayed on the display unit 4300. Moreover, using application software for converting image data, the data and the information may also be converted into an image such as a panorama before they are displayed or stored.

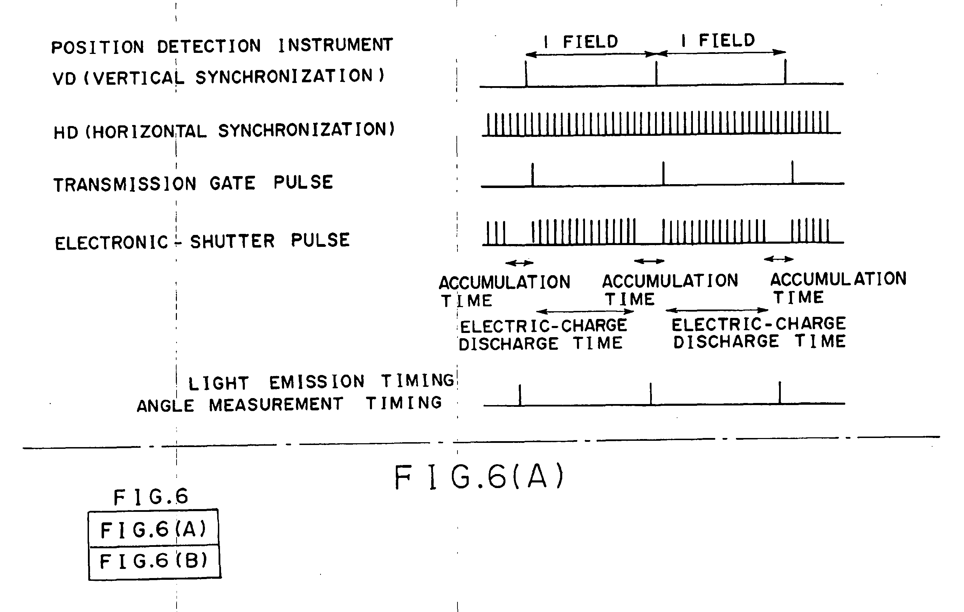

Here, how the image such as a panorama is formed will be described with reference to Fig. 5. As shown in Fig. 5 (a), picking up images at intervals along the 360-degree perimeter direction, and then jointing the images while rotating them, can form an image such as a panorama as shown in Fig. 5 (b).

As shown in Fig. 3 (c), on the assumption that coordinates of the image on the CCD are (X', Y'), an angle of the rotation is θ, and converted coordinates are (X, Y), performing arithmetic operation of the coordinates, which is expressed by the first equation, suffices.

## Equation 1

$$\begin{pmatrix} x \\ y \end{pmatrix} = \begin{pmatrix} \cos\theta & -\sin\theta \\ \sin\theta & \cos\theta \end{pmatrix} \begin{pmatrix} X' \\ Y' \end{pmatrix}$$

(First equation)

.

Incidentally, Fig. 3 (c) shows that the image rotates in order of ①, ②, ③, ④.

Moreover, the first imaging unit 1320 has a wide visual field ; to be more specific, the first imaging unit 1320 can do wide-angle imaging (with low accuracy). The second imaging unit 1330 has a narrow visual field; to be more specific, the second imaging unit 1330 can do narrow-angle imaging (with high accuracy). Two images can be superimposed on each other. Further, the wide-angle image and the narrow-angle image which are associated with each other can be stored.

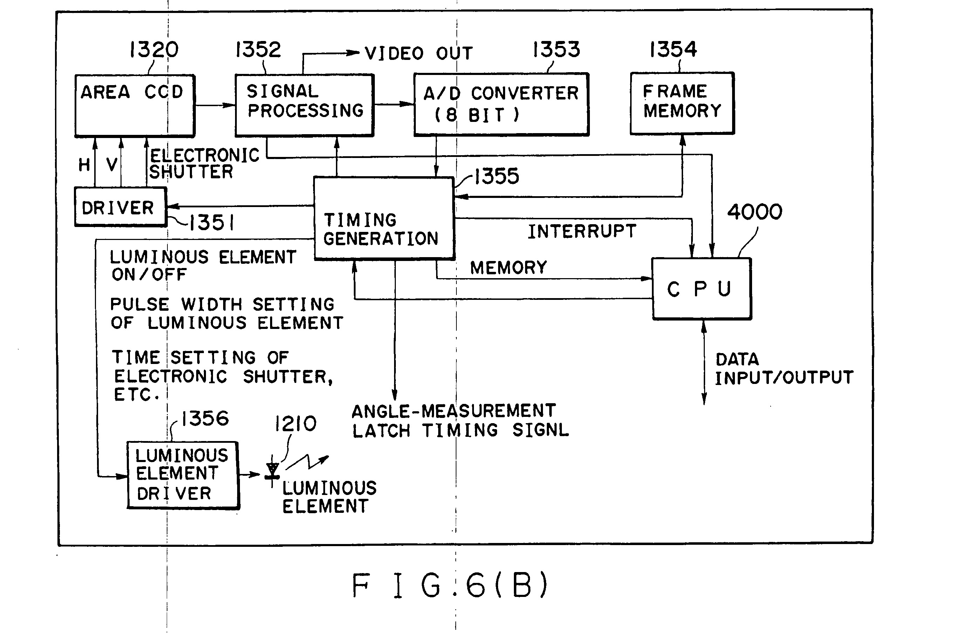

Next, timing of the reflector detection light emitting unit 1210 relative to the first imaging unit 1320 and the second imaging unit 1330 will be described with reference to Fig. 6. Here, an area CCD will be described as an image sensor.

The reflector detecting unit 1200 comprises the first imaging unit 1320, a CCD driver 1351, a signal processing unit 1352, an A/D converter 1353, a frame memory 1354, a timing generation circuit 1355, a luminous element driver 1356, the reflector detection light emitting unit 1210, and a CPU 4000.

As shown in Fig. 6, the CCD uses a vertical synchronizing signal VD for separating fields, and a horizontal synchronizing signal HD. In this embodiment, an electronic shutter is adopted. This electronic shutter intermittently switches between accumulation time of CCD's electric charge and discharge time of CCD's electric charge.

In this embodiment, it is so devised that during the accumulation time of CCD's electric charge, the luminous element driver 1356 is driven to emit an optical pulse from the reflector detection light emitting unit 1210. This enables efficient tracking and detection.

In addition, it is also so devised that reading of the first imaging unit 1320 is synchronized with light emission of an optical pulse by the reflector detection light emitting unit 1210 and with detection by the angle measuring unit 1400. In this connection, description of the second imaging unit 1330 will be omitted as it is similar to the first imaging unit 1320.

An angle measuring unit 1400 detects an angle of the swinging unit relative to the fixed unit by use of a rotor mounted on the swinging unit and by use of a detecting unit formed on the fixed unit. To be more specific, it is so devised that output signals of a horizontal-angle and vertical-angle encoder 1410 are transmitted to the angle measuring unit 1400 which thereby calculates an angle.

A detection routine of the position detection instrument 10000, which is used for detecting the photoreceiver 20000, will be described as below.

To start with, the reflector detection light emitting unit 1210 is turned on, and then a drive unit swings the reflection mirror 2110. The reflector 2000b is detected by observing an output of a wide-angle image sensor. If the reflector 2000b is detected, before an image enters the narrow-angle image sensor, the operation processing unit 4000 performs calculation using data of an angle detecting unit and a position of the image sensor, and the drive unit moves the reflection mirror 2110.

If the image of the reflector 2000b enters the narrow-angle image sensor, the drive unit further moves the reflection mirror 2110 to an area in proximity to the central axis O, or the operation processing unit 4000 determines a horizontal angle, and a vertical angle, of the reflector 2000b at that position using data of an angle detecting unit and a position of the image sensor. In such a case, the narrow-angle image and the wide-angle image can also be stored. Moreover, image data which includes a horizontal angle, a vertical angle, and measured distance data can also be stored.

First detecting the reflector 2000b by a wide-angle image sensor enables execution at high speed.

Although a lens system contains distortion, the distortion can also be eliminated by creating beforehand, at a reference position, calibration data for an optical system including the first imaging unit 1320 and the second imaging unit 1330, and then by subtracting an error at a stage of arithmetic processing that detects a position of a corner cube 21000.

This embodiment relates to a position detection instrument that emits distance measuring light and measuring light by use of a rotating mirror in such a manner that directions of the distance measuring light and the measuring light change horizontally or vertically, and that detects the reflector 2000b coming within a range of the emittance and then measures its position.

The position detection instrument comprises an image sensor as a light receiving unit. This image sensor is not a light receiving sensor that detects only light in particular. Workability of image data which is output from the image sensor can be improved by adding the image data to the conventional method in which numerical values are stored.

Moreover, as for the position detection instrument 10000 in this embodiment, the rotating unit 2100 which turns directions of distance measuring light and measuring light before the emission may also consist of a horizontal rotating mechanism. In this case, the horizontal angle encoder 1410 provided on the rotating unit 2100 is devised to approximately detect a horizontal position of the corner cube 21000 as a target to be measured. A horizontal angle value relative to the collimation center, which is output from the horizontal angle encoder 1410, is corrected using video of the first imaging unit 1320 and the second imaging unit 1330, and thereby an angular height can be calculated. If fan shaped light is used, the distance measuring light can cover an angular-height distance measuring range.

The first imaging unit 1320 and the second imaging unit 1330 which are used here are image sensors capable of capturing images. The image data captured by the image sensors are used to detect a position of the corner cube 21000, and are also stored as image data within a measurable range.

The image sensor for collecting image data according to this embodiment detects measuring light which is emitted from the distance-detection light emitting unit 2211 and is then reflected by the reflector 2000b. The image sensor also captures an image of the target 2000a and then stores the image. Further, the image sensor captures and stores circumferential images within a swinging range including the corner cube 21000 of the target 2000a. Moreover, the image sensor is constituted of two image sensors (the first imaging unit 1320 and the second imaging unit 1330) having ranges of an angle of view different from each other. Images obtained by the two image sensors are used as far and near or enlarged image data.

In this embodiment, in addition to swinging in the horizontal direction, swinging in the up and down (vertical) direction is also performed. Each of the horizontal swinging and the vertical swinging is detected by its dedicated encoder. Once a direction, and a position, of the corner cube 2100b of the target 2000a are detected in approximate image data, a horizontal angle value and an angular height value are corrected by a value of image data, and thereby a correct direction of the corner cube 2100b is determined.

The angle measuring unit 1400 detects an angle of the rotating unit 2100 relative to the fixed unit 2200 by use of a rotor mounted on the rotating unit 2100 and by use of a detecting unit formed on the fixed unit 2200.

The distance-detection light emitting unit 2211 corresponds to a light source unit. The distance-detection light receiving unit 2214 corresponds to a light receiving unit. The relay lens 1212, the mirror 1213, and the mirror 2110 of the swinging unit correspond to an emitting means. The angle measuring unit 1400 corresponds to the angle detector. The first imaging unit 1320 and the second imaging unit 1330 correspond to the image sensor. The corner cube 21000 of the target 2000a corresponds to the reflector.

The horizontal drive motor 2190, and the like, correspond to a swinging mechanism.

According to one aspect of the present invention, there is provided a position measuring instrument that irradiates a reflector with measuring light, and that determines a direction by the reflected light, said position measuring instrument comprising: a light source unit for emitting measuring light; an image sensor for receiving its reflected light; emitting means for emitting measuring light and then leading its reflected light to the image sensor; a swinging mechanism for swinging the emitting means; and an angle detector for detecting an emission direction of the emitting means; wherein: said light source unit and said image sensor are provided in such a manner that they are fixed; and said position measuring instrument further comprises an operation processing unit for converting coordinates of the reflector as a deviation relative to a central axis on the basis of an output of the image sensor and an output of the angle detector at the time of light receiving.

The position measuring instrument according to the present invention, therefore, enables an improvement in work efficiency to a large extent, which is a produced effect.

Industrial Applicability

The present invention relates to a position detection instrument, and more particularly to a position detection instrument capable of emitting distance measuring light and measuring light to perform three-dimensional measurement of a target position, and further capable of recording image data in its emission direction or in directions other than the emission direction.

**Claims**

1. A position measuring instrument (10000) that is configured to irradiate a target reflector (2000b) with measuring light to determine a direction on the basis of its reflected light, said position measuring instrument (10000) comprising:

    a light source unit (1210) for emitting measuring light;
    an image sensor (1320, 1330) for receiving its reflected light;
    emitting means (2110) for emitting measuring light and then leading its reflected light to the image sensor (1320, 1330); and
a swinging mechanism (2100) for swinging the emitting means (2110);
said light source unit (1210) and said image sensor (1320, 1330) are provided in such a manner that they are stationary in use,

**characterized in that**
an angle detector (2120, 2180) for detecting an emission direction of the emitting means (2110) is provided and that said position measuring instrument (10000) further comprises an operation processing unit (4000) for converting coordinates of the target reflector (2000b) as a deviation relative to the collimation central axis ($\theta$) of the measuring light on the basis of an output of the image sensor (1320, 1330) and an output of the angle detector (2120, 2180) at the time of light receiving.

2.  A position detection instrument according to claim 1, further comprising:

    a distance measuring unit (1100) that emits measuring light and distance measuring light to determine a distance to the target reflector (2000b) and thereby to determine a position of the target reflector (2000b) from the distance and a direction.

3.  A position measuring instrument according to claim 1, further comprising:

    a storage unit (4200) for storing image data obtained from the image sensor.

4.  A position measuring instrument according to claim 3, wherein:

    when obtaining image data from the image sensor (1320, 1330), coordinates of the image data are converted on the basis of an output of the angle detector (2120, 2180) at the time of light receiving by the image sensor (1320, 1330).

5.  A position measuring instrument according to claim 3, wherein:

    said image sensor (1320, 1330) comprises a first light receiving sensor (1320) for detecting a deviation relative to an optical axis center, and a second light receiving sensor (1330) covering a detection range different from that of the first light receiving sensor (1320).

6.  A position detection instrument according to claim 5, wherein:

    image data are recorded at intervals of a predetermined swinging angle so that the image data are overlapped with one another, and then the recorded image data are formed into a continuously arranged image.

7.  A position detection instrument according to claim 5, wherein:

    image data obtained from the first image sensor (1320) is associated with image data obtained from the second image sensor (1330) with respect to their positions.

**Patentansprüche**

1.  Ein Positionsmessinstrument (10000), welches ausgebildet ist, um einen Reflektor (2000b) mit Messlicht zu bestrahlen, um eine Richtung auf der Grundlage seines reflektierten Lichtes zu bestimmen, wobei das Positionsmessinstrument (100000) aufweist:

    eine Lichtquelleneinheit (1210) zum Aussenden von Messlicht;
    einen Bildsensor (1320, 1330) zum Empfangen seines reflektierten Lichtes;
    eine Aussendeeinrichtung (2110) zum Aussenden von Messlicht und dann zum Führen seines reflektierten Lichtes zu dem Bildsensor (1320, 1330); und
    einen Schwungmechanismus (2100) zum Schwingen der Aussendeeinrichtung (2110);

    wobei die Lichtquelleneinheit (1210) und der Bildsensor (1320, 1330) derart ausgebildet sind, dass sie bei Benutzung stationär sind,

**dadurch gekennzeichnet, dass**

ein Winkeldetektor (2120, 2180) zum Erfassen einer Aussenderichtung der Aussendeeinrichtung (2110) vorgesehen ist und dass

das Positionsmessinstrument (10000) weiter aufweist eine Operationsverarbeitungseinheit (4000) zum Umwandeln der Koordinaten des Zielreflektors (2000b) als eine Abweichung relativ zu der Kollimationszentralachse (θ) des Messlichtes auf der Grundlage einer Ausgabe des Bildsensors (1320, 1330) und einer Ausgabe des Winkeldetektors (2120, 2180) zum Zeitpunkt des Lichtempfangs.

2. Positionsmessinstrument nach Anspruch, weiter aufweisend:

eine Entfernungsmesseinheit (1100), welche Messlicht und Entfernungsmesslicht aussendet, um eine Entfernung zu dem Zielreflektor (2000b) zu bestimmen und hierdurch eine Position des Zielreflektors (2000b) aus der Entfernung und einer Richtung zu bestimmen.

3. Positionsmessinstrument nach Anspruch 1, weiter aufweisend:

eine Speichereinheit (4200) zum Speichern von Bilddaten, erhalten von dem Bildsensor.

4. Positionsmessinstrument nach Anspruch 3, bei welchem, wenn Bilddaten von dem Bildsensor (1320, 1330) erhalten werden, Koordinaten der Bilddaten umgewandelt werden auf der Grundlage einer Ausgabe des Winkeldetektors (2120, 2180) zu der Zeit des Lichtempfangs durch den Bildsensor (1320, 1330).

5. Positionsmessinstrument nach Anspruch 3, bei welchem der Bildsensor (1320, 1330) einen ersten Lichtempfangssensor (1320) zum Erfassen einer Abweichung relativ zu einem optischen Achsenzentrum und einen zweiten Lichtempfangssensor (1330) aufweist, welcher einen Erfassungsbereich verschieden von demjenigen des ersten Lichtempfangssensors (1320) abdeckt.

6. Positionsmessinstrument nach Anspruch 5, bei welchem Bilddaten aufgezeichnet werden in Intervallen eines vorbestimmten Schwingwinkels, so dass die Bilddaten einander überlappen, und dann die aufgezeichneten Bilddaten in ein kontinuierlich angeordnetes Bild geformt werden.

7. Positionsmessinstrument nach Anspruch 5, bei welchem Bilddaten, erhalten von dem ersten Bildsensor (1320), Bilddaten zugeordnet werden, erhalten von dem zweiten Bildsensor (1330), in Bezug zu ihren Positionen.

## Revendications

1. Un instrument de mesure de position (10000) qui est configuré pour irradier un réflecteur cible (2000b) avec de la lumière de mesure pour déterminer une direction sur la base de sa lumière réfléchie, ledit instrument de mesure de position (10000) comprenant :

une unité de source lumineuse (1210) pour émettre de la lumière de mesure ;
un capteur d'image (1320, 1330) pour recevoir sa lumière réfléchie ;
un moyen émetteur (2110) pour émettre de la lumière de mesure et puis guider sa lumière réfléchie vers le capteur d'image (1320, 1330) ;et
un mécanisme basculant (2100) pour basculer le moyen émetteur (2110) ; ladite unité de source lumineuse (1210) et ledit capteur d'image (1320, 1330) étant prévus de manière à être fixes lors de l'utilisation,

**caractérisé en ce que** :

il est prévu un détecteur d'angle (2120, 2180) pour détecter une direction d'émission du moyen émetteur (2110) et **en ce que**
ledit instrument de mesure de position (10000) comprend en outre une unité de traitement d'opération (4000) pour convertir les coordonnées du réflecteur cible (200b) en un écart par rapport à l'axe central de collimation (θ) de la lumière de mesure sur la base d'une sortie du capteur d'image (1320, 1330) et d'une sortie du détecteur d'angle (2120, 2180) à l'instant de la réception de la lumière.

**2.** Un instrument de détection de position selon la revendication 1, comprenant en outre :

une unité de mesure de distance (1100) qui émet de la lumière de mesure et de la lumière de mesure de distance pour déterminer une distance au réflecteur cible (2000b) et déterminer ainsi une position du réflecteur cible (2000b) à partir de la distance et d'une direction.

**3.** Un instrument de détection de position selon la revendication 1, comprenant en outre :

une unité de stockage (4200) pour stocker des données d'image obtenues du capteur d'image.

**4.** Un instrument de détection de position selon la revendication 3, dans lequel :

lors de l'obtention des données d'image du capteur d'image (1320, 1330), les coordonnées des données d'image sont converties sue la base d'une sortie du détecteur d'angle (2120, 2180) à l'instant de la réception de la lumière par le capteur d'image (1320, 1330).

**5.** Un instrument de détection de position selon la revendication 3, dans lequel :

ledit capteur d'image (1320, 1330) comprend un premier capteur de réception de lumière (1320) pour détecter un écart par rapport à un centre d'axe optique, et un second capteur de réception de lumière (1330) couvrant une plage de détection différente de celle du premier capteur de réception de lumière (1320).

**6.** Un instrument de détection de position selon la revendication 5, dans lequel :

les données d'image sont enregistrées à des intervalles d'un angle de basculement prédéterminé de sorte que les données d'image se chevauchent les unes les autres, et ensuite les données d'image enregistrées sont formées en une image disposée de façon continue.

**7.** Un instrument de détection de position selon la revendication 5, dans lequel :

les données d'image obtenues du premier capteur d'image (1320) sont associées aux données d'image obtenues du second capteur d'image (1330) en ce qui concerne leurs positions.

# F I G. 1

REFLECTOR DETECTING UNIT

F I G . 2

```
┌─────────────────────────────────────────────────────┐
│  ┌──────────┐      ┌─────────────────────┐            │
│  │ IMAGING  │─────▶│ REFLECTOR DETECTING │   ⌐1200    │
│  │ UNIT 1   │      │     CIRCUIT         │            │
│  ├──────────┤      │                     │   ⌐1340    │
│  │ IMAGING  │─────▶│                     │            │
│  │ UNIT 2   │      └─────────────────────┘            │
│  └──────────┘ ⌐1330      ⌐1210                        │
│  ┌──────────────────────┐                             │
│  │ REFLECTOR-DETECTION   │◀────                        │
│  │ LIGHT EMITTING UNIT   │                             │
│  └──────────────────────┘                             │
└─────────────────────────────────────────────────────┘
```

1320

REFLECTOR DETECTING CIRCUIT

1200

1340

1330

1210

REFLECTOR-DETECTION LIGHT EMITTING UNIT

4000                    4200

DATA TRANSMISSION UNIT       ⌐1300

1100

STORAGE UNIT

OPERATION UNIT

C P U

5000

DISTANCE MEASURING UNIT (LIGHT EMITTING UNIT, LIGHT RECEIVING UNIT)

1110

1120

DISPLAY UNIT

4300

DISTANCE ARITHMETIC OPERATION CIRCUIT

DRIVE CIRCUIT

4400

DISTANCE MEASURING UNIT

ANGLE OPERATION UNIT        1400

4500        LEVELING MOTOR

1410

HORIZONTAL ANGLE ENCODER

ROTATING MIRROR ENCODER     2110

SLANT MEASURING UNIT        2300

10000

EP 1 519 146 B1

# FIG. 3

(A)

(B)

(C)

# F I G. 4

# F I G. 5

POSITION DETECTION INSTRUMENT
VD (VERTICAL SYNCHRONIZATION)

HD (HORIZONTAL SYNCHRONIZATION)

TRANSMISSION GATE PULSE

ELECTRONIC - SHUTTER PULSE

|← 1 FIELD →|← 1 FIELD →|

ACCUMULATION          ACCUMULATION          ACCUMULATION
TIME                          TIME                          TIME

ELECTRIC-CHARGE          ELECTRIC-CHARGE
DISCHARGE TIME          DISCHARGE TIME

LIGHT EMISSION TIMING
ANGLE MEASUREMENT TIMING

F I G.6(A)

FIG.6

| FIG.6(A) |
|---|
| FIG.6(B) |

EP 1 519 146 B1

F I G . 6 (B)

1354 FRAME MEMORY

1353 A/D CONVERTER (8 BIT)

1352 SIGNAL PROCESSING

1320 AREA CCD

VIDEO OUT

ELECTRONIC SHUTTER

H V

1351 DRIVER

1355 TIMING GENERATION

4000 CPU

INTERRUPT

MEMORY

DATA INPUT/OUTPUT

ANGLE-MEASUREMENT LATCH TIMING SIGNL

LUMINOUS ELEMENT ON/OFF

PULSE WIDTH SETTING OF LUMINOUS ELEMENT

TIME SETTING OF ELECTRONIC SHUTTER, ETC.

1356 LUMINOUS ELEMENT DRIVER

1210 LUMINOUS ELEMENT

# F I G。 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6249743 B1